# EUROPÄISCHE PATENTSCHRIFT

(11) **EP 2 401 494 B1**
(45) Veröffentlichungstag und Bekanntmachung des Hinweises auf die Patenterteilung: **05.12.2012**
(21) Anmeldenummer: 10705785.3
(22) Anmeldetag: 27.01.2010
(51) Int. Cl.: F02M 25/08

(54) **VORRICHTUNG ZUR TANKENTLÜFTUNG**
APPARATUS FOR TANK VENTILATION
DISPOSITIF D'AÉRATION DE RÉSERVOIR

(30) Priorität: 25.02.2009 DE 102009011155
(43) Veröffentlichungstag der Anmeldung: 04.01.2012
(73) Patentinhaber: IAV GmbH, 10587 Berlin (DE)
(72) Erfinder: GOTTSCHALK, Wolfram, 39112 Magdeburg (DE); MAGNOR, Olaf, 38104 Braunschweig (DE); REITEBUCH, Daniel, 10715 Berlin (DE); SCHULZ, Franziska, 18146 Rostock (DE)
(74) Vertreter: Buss, Fritz Gerd
(86) Internationale Anmeldenummer: PCT/DE2010/000092
(87) Internationale Veröffentlichungsnummer: WO 2010/097067

(56) Entgegenhaltungen:
- EP-A2- 0 840 002
- DE-A1- 19 856 842
- JP-A- 2007 278 094
- US-A- 6 014 958

## Beschreibung

Die vorliegende Erfindung betrifft eine Vorrichtung zur Tankentlüftung gemäß den Merkmalen des Patentanspruches 1.

Aus der DE19645382C2 ist eine Vorrichtung zur Tankentlüftung für ein Fahrzeug mit einer Verbrennungskraftmaschine vorbekannt. Diese Vorrichtung umfasst eine erste Tankentlüftungsleitung zur Verbindung eines Tanks mit einem Adsorptionsfilter. Außerdem ist eine an den Adsorptionsfilter angeschlossene und in eine Ansaugleitung der Verbrennungskraftmaschine im Bereich einer Drosselklappe mündende und ein zur Massenstrommodulation geeignetes Tankentlüftungsventil aufweisende zweite Tankentlüftungsleitung vorgesehen. Stromabwärts des Tankentlüftungsventils zwischen der Ansaugleitung und einem zu der Ansaugleitung parallel verlaufenden Leitungsabschnitt der zweiten Tankentlüftungsleitung ist eine Antriebsvorrichtung angeordnet. Die Antriebsvorrichtung umfasst ein Turbinenrad, das in der Ansaugleitung angeordnet ist und ein mit dem Turbinenrad über eine gemeinsame Welle gekoppeltes Pumpenrad, das in der zweiten Tankentlüftungsleitung angeordnet ist. Während des Betriebes der Verbrennungskraftmaschine wird durch den durch die Ansaugleitung fließenden Massenstrom das Turbinenrad und somit das Pumpenrad angetrieben, so dass auch bei einer vollständig geöffneten Drosselklappe, die in der Ansaugleitung angeordnet ist, eine Tankentlüftung beziehungsweise eine Regeneration des Adsorptionsfilters erfolgen kann.

Es ist Aufgabe der vorliegenden Erfindung, diesen Stand der Technik so weiter auszubauen, dass insbesondere bei aufgeladenen Verbrennungskraftmaschinen eine zuverlässige Tankentlüftung bei einem möglichst effizienten Betrieb der zu Grunde liegenden Verbrennungskraftmaschine sichergestellt ist.

Diese Aufgabe wird erfindungsgemäß mittels einer Vorrichtung zur Tankentlüftung gelöst, wobei ein Tank über eine erste Tankentlüftungsleitung mit einem Adsorptionsfilter verbunden ist, wobei der Adsorptionsfilter über eine zweite Tankentlüftungsleitung mit der Ansaugleitung einer Verbrennungskraftmaschine verbunden ist, wobei eine Antriebsvorrichtung vorgesehen ist, die ein Turbinenrad und ein Pumpenrad umfasst, wobei das Turbinenrad und das Pumpenrad über eine gemeinsame Welle miteinander gekoppelt sind, wobei das Pumpenrad in der zweiten Tankentlüftungsleitung angeordnet ist, wobei das Turbinenrad in einer Überbrückungsleitung angeordnet ist, wobei die Überbrückungsleitung von der Ansaugleitung sowohl abzweigt als auch in die Ansaugleitung einmündet, wobei die Überbrückungsleitung stromabwärts eines in der Ansaugleitung angeordneten Verdichters eines Aufladeaggregats von der Ansaugleitung abzweigt. Erfindungsgemäß vorteilhaft wird dadurch, dass eine Überbrückungsleitung vorgesehen ist, in der das Turbinenrad zum Antrieb des Pumperades angeordnet ist, im Vergleich zum genannten Stand der Technik, die Strömung der Gasmassen, die der Verbrennungskraftmaschine zufließen, nicht durch ein permanent in der Ansaugleitung angeordnetes Turbinenrad gestört, welches auch dann, wenn keine Tankentlüftung/Regeneration des Adsorptionsfilters erforderlich ist, angetrieben wird. Mit anderen Worten kann der Betriebsfall eintreten, dass eine Tankentlüftung beziehungsweise eine Regeneration des Adsorptionsfilters nicht erforderlich ist, jedoch ein maximales Drehmoment von der Verbrennungskraftmaschine gefordert wird, so dass unnötigerweise ein Antrieb des Pumpenrades und eine nicht unerhebliche Störung der Strömung der Gasmassen, die der Verbrennungskraftmaschine zufließen, auftritt. Prinzipiell kann ein mit der Störung dieser Strömung verbundener Widerstand, beziehungsweise der Füllungsverlust der Verbrennungskraftmaschine, mittels einer Aufladeinrichtung, wie einem Abgasturbolader oder einem mechanisch angetriebenen Aufladeaggreagt, mit einem Verdichter in der Ansaugleitung der Verbrennungskraftmaschine, wieder kompensiert werden, jedoch auf Kosten des Gesamtwirkungsgrades des Verbundes aus Aufladeeinrichtung und Verbrennungskraftmaschine. Außerdem kann, wie in einer Ausführung der vorliegenden Erfindung vorgesehen, mittels eines Ventils, das in der Überbrückungsleitung stromaufwärts des Turbinenrades der Antriebsvorrichtung angeordnet ist, eine Strömung über das Turbinenrad entweder komplett unterbunden oder aber kontinuierlich oder schrittweise den jeweiligen Anforderungen, die möglicherweise seitens der Tankentlüftung beziehungsweise der Regeneration des Adsorptionsfilters gestellt werden, angepasst werden. Erfindungsgemäß kann in einer Ausführung die Überbrückungsleitung stromabwärts eines in der Ansaugleitung angeordneten Verdichters und stromaufwärts einer in der Ansaugleitung angeordneten Drosselklappe abzweigen und stromabwärts der Drosselklappe wieder in die Ansaugleitung einmünden.

Bei dieser Ausführung teilt sich der Gasmassenstrom, welcher der Verbrennungskraftmaschine zufließt, in zwei Teilströme auf, nämlich einen ersten Teilstrom über die Drosselklappe und einen zweiten Teilstrom über das Turbinenrad in der Überbrückungsleitung. Angenommen, es liegt die Anforderung vor, eine Tankentlüftung beziehungsweise eine Regeneration des Adsorptionsfilters vorzunehmen und die Verbrennungskraftmaschine wird in einem Betriebspunkt betrieben, bei dem die Drosselklappe nur zum Teil geöffnet ist, dann kann erfindungsgemäß vorteilhaft durch Öffnen des Ventils in der Überbrückungsleitung und durch Schließen der Drosselklappe der Gasmassenstrom über das Turbinenrad umgeleitet werden, wobei das Pumpenrad angetrieben wird und auf diese Weise die ohnehin auftretenden Verluste durch die Drosselung der der Verbrennungskraftmaschine zufließenden Gasmassen zur aktiven Tankentlüftung genutzt werden. In einer weiteren Ausführung der Erfindung ist es vorgesehen, dass die Überbrückungsleitung stromabwärts eines in der Ansaugleitung angeordneten Verdichters und stromaufwärts einer in der Ansaugleitung angeordneten Drosselklappe abzweigt und stromaufwärts des Verdichters wieder in die Ansaugleitung einmündet.

Alle aufgeführten Anordnungen der Überbrückungsleitung sind bevorzugt in Verbindung mit bestehenden Systemen zur Tankentlüftung/Regeneration des Adsorptionsfilters, die allein auf ein betriebspunktabhängig ausreichendes Druckgefälle zwischen der Ansauganlage stromabwärts einer Drosselklappe und dem Tank/Adsorptionsbehälter aufbauen, auszuführen, so dass sich eine jeweils einstellende Erhöhung der aufzubringenden Ladungswechselarbeit durch das zumindest teilweise Schließen der Drosselklappe beziehungsweise durch eine Verstimmung des Betriebspunktes der Aufladeeinrichtung/des Verdichters in der Ansauganlage in Grenzen hält.

Weitere vorteilhafte Ausgestaltungen der vorliegenden Erfindung sind dem nachfolgenden Ausführungsbeispiel sowie den abhängigen Patentansprüchen zu entnehmen.

### Hierbei zeigen:

- Fig. 1:: eine schematische Darstellung einer ersten Ausführung der erfindungsgemäßen Vorrichtung,
- Fig. 2:: eine schematische Darstellung einer weiteren Ausführung der erfindungsgemäßen Vorrichtung.

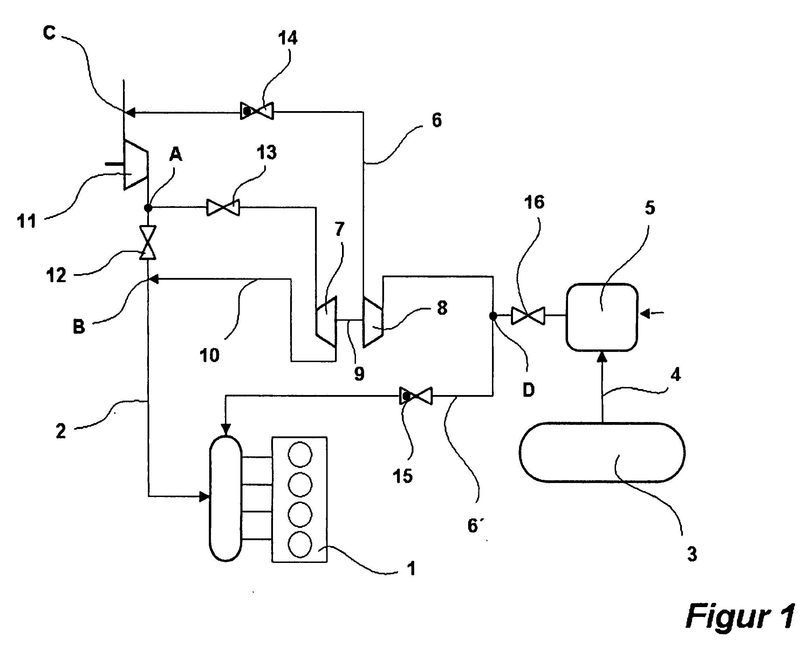

Gemäß Figur 1 ist für eine erste Ausführung der vorliegenden Erfindung eine allgemein bekannte Verbrennungskraftmaschine 1 mit einer Ansaugleitung 2, einem Tank 3, einer ersten Tankentlüftungsleitung 4, einem Adsorptionsfilter 5 und einer zweiten Tankentlüftungsleitung 6 dargestellt. Ferner ist eine Antriebsvorrichtung dargestellt, die ein Turbinenrad 7 und ein Pumpenrad 8 umfasst, die über eine gemeinsame Welle 9 miteinander gekoppelt sind. Das Pumpenrad 8 ist in der zweiten Tankentlüftungsleitung 6 angeordnet und das Turbinenrad 7 ist in einer Überbrückungsleitung 10 angeordnet. Die Überbrückungsleitung 10 zweigt am Punkt A stromabwärts eines in der Ansaugleitung 2 angeordneten Verdichters 11 einer nicht weiter gezeigten Aufladeeinrichtung, wie beispielsweise einem Abgasturbolader, von der Ansaugleitung 2 ab und mündet am Punkt B wieder in die Ansaugleitung 2 ein. Die Überbrückungsleitung 10 zweigt also stromabwärts des in der Ansaugleitung 2 angeordneten Verdichters 11 und stromaufwärts einer in der Ansaugleitung 2 angeordneten Drosselklappe 12 von der Ansaugleitung 2 ab sowie mündet stromabwärts der Drosselklappe 12 wieder in die Ansaugleitung 2 ein. In der Überbrückungsleitung 10 ist stromaufwärts des Turbinenrades 7 ein Ventil 13 angeordnet. Die zweite Tankentlüftungsleitung 6 mündet am Punkt C stromaufwärts des Verdichters 11 in die Ansaugleitung 2 ein. In der zweiten Tankentlüftungsleitung 6 ist stromabwärts des Pumpenrades 8 ein Ventil 14 angeordnet, das bevorzugt als Rückschlagventil ausgeführt ist, das in Richtung der Ansaugleitung 2 öffnet. In der zweiten Tankentlüftungsleitung 6 ist weiterhin ein Abzweig D vorhanden, von dem aus ein zusätzlicher Teil der zweiten Tankentlüftungsleitung 6' abzweigt, der in die Ansaugleitung 2 stromabwärts der Drosselklappe 12 einmündet. In dem zusätzlichen Teil der zweiten Tankentlüftungsleitung 6' ist ein Ventil 15 angeordnet, das bevorzugt als Rückschlagventil ausgeführt ist, das in Richtung der Ansaugleitung 2 öffnet. Dieser zusätzliche Teil der zweiten Tankentlüftungsleitung 6' entspricht dem aus dem Stand der Technik allgemein bekannten System zur Tankentlüftung/Regeneration des Adsorptionsfilters 5, welches lediglich dann eine sichere und effiziente Tankentlüftung gewährleistet, wenn ein ausreichendes Druckgefälle zwischen der Ansaugleitung 2 stromabwärts der Drosselklappe 12 und dem Adsorptionsfilter 5 beziehungsweise der Umgebung besteht. Mit anderen Worten zeigt Figur 1 die bevorzugt anzuwendende Kombination eines solchen bekannten Systems mit der erfindungsgemäßen Vorrichtung. In der zweiten Tankentlüftungsleitung 6 ist darüber hinaus stromabwärts des Adsorptionsfilters 5 und stromaufwärts des Pumpenrades 8 ein weiteres Ventil 16 angeordnet. Während des Betriebes der Verbrennungskraftmaschine 1 beziehungsweise während des Betriebes eines nicht weiter dargestellten Fahrzeuges, das eine Vorrichtung gemäß der vorliegenden Erfindung umfasst, werden Kraftstoffdämpfe, die sich in dem Tank 3 bilden, über die erste Tankentlüftungsleitung 4 dem Adsorptionsfilter 5 zugeführt und dort eingelagert. Wird eine Regeneration des Adsorptionsfilters 5 angefordert, wird das Ventil 16 geöffnet. Ist die Drosselklappe 12 nur zum Teil geöffnet und herrscht zwischen der Ansaugleitung 2 und dem Adsorptionsfilter 5 ein ausreichendes Druckgefälle, öffnet das Ventil 15, das als zur Ansaugleitung 2 öffnendes Rückschlagventil ausgeführt ist und es fließt ein Gasmassenstrom vom Adsorptionsfilter 5 über die zweite Tankentlüftungsleitung 6 und den zusätzlichen Teil der zweiten Tankentlüftungsleitung 6' zur Ansaugleitung 2 und somit zu der Verbrennungskraftmaschine 1. Herrscht jedoch kein ausreichendes derartiges Druckgefälle, beispielsweise weil die Verbrennungskraftmaschine 1 hoch belastet wird und die Drosselklappe 12 weit geöffnet ist und muss der Adsorptionsfilter 5 regeneriert werden, beispielsweise weil hohe Umgebungstemperaturen herrschen und viel Kraftstoff im Tank 3 verdampft, dann kann erfindungsgemäß das Ventil 13 stromaufwärts des Turbinenrades 7 in der Überbrückungsleitung 10 geöffnet und die Drosselklappe 12 um einen bestimmten Betrag geschlossen werden, so dass sich ein Gasmassenstrom über dem Turbinenrad 7 ausbildet und das Pumpenrad 8 angetrieben wird, so dass sich ein Druckgefälle zwischen dem Adsorptionsfilter 5 über die zweite Tankentlüftungsleitung 6 und das sich öffnende Ventil 14 hin zur Ansaugleitung 2 stromaufwärts des Verdichters 11 aufbaut und der Adsorptionsfilter 5 regeneriert wird, wobei das Ventil 15 in dem zusätzlichen Teil der zweiten Tankentlüftungsleitung 6' infolge des relativ geringen Druckes in der zweiten Tankentlüftungsleitung 6 beziehungsweise dem zusätzlichen Teil der zweiten Tankentlüftungsleitung 6' geschlossen ist. Der sich durch die Regeneration des Adsorptionsfilters 5 ausbildende Gasmassenstrom wird am Punkt C der Ansaugleitung 2 wieder zugeführt, wobei der in Bezug auf Punkt C stromabwärts in der Ansaugleitung 2 angeordnete Verdichter 11 diesen Gasmassenstrom in Richtung der Verbrennungskraftmaschine 1 fördert, so dass die Kraftstoffdämpfe, ohne an die Umgebung abgegeben zu werden, in der Verbrennungskraftmaschine 1 umgesetzt werden.

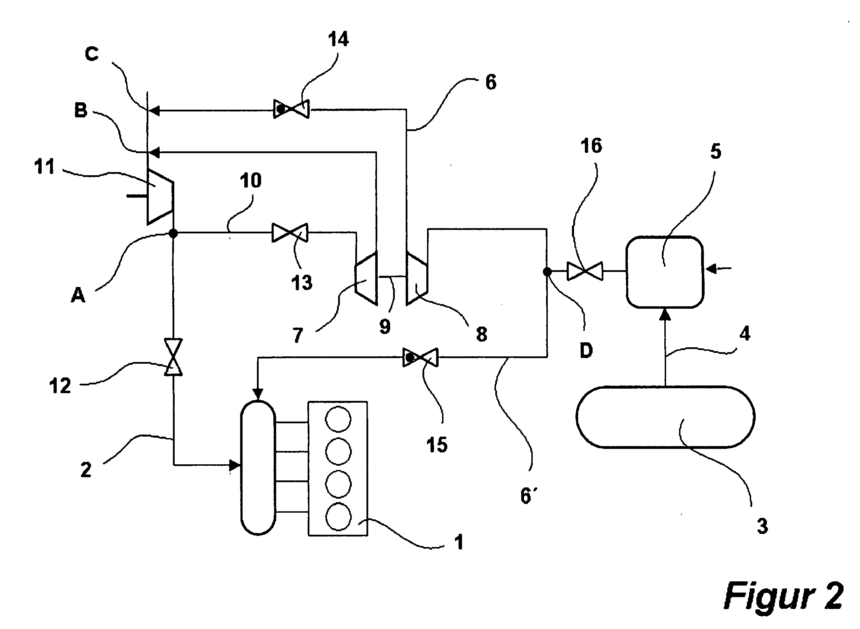

Gemäß Figur 2 ist eine weitere Ausführung der vorliegenden Erfindung gezeigt, die im Vergleich zu Figur 1 lediglich hinsichtlich des Verlaufs der Überbrückungsleitung 10 Unterschiede aufweist. Gemäß dieser Ausführungsform zweigt die Überbrückungsleitung 10 stromabwärts des in der Ansaugleitung 2 angeordneten Verdichters 11 und stromaufwärts der in der Ansaugleitung 2 angeordneten Drosselklappe 12 am Punkt A von der Ansaugleitung 2 ab und mündet stromaufwärts des Verdichters 11 am Punkt B wieder in die Ansaugleitung 2 ein. Dadurch bildet sich beim Öffnen des Ventils 13 in der Überbrückungsleitung 10, insbesondere für den Fall, dass eine Tankentlüftung/Regeneration des Adsorptionsfilters 5 angefordert wird, ein Gasmassenstrom über dem Turbinenrad 7 aus und das Pumpenrad 8 wird angetrieben, so dass eine aktive Tankentlüftung/Regeneration des Adsorptionsfilters 5 erfolgen kann.

Bei beiden genannten Ausführungen gemäß Figur 1 und 2 ist es erfindungsgemäß unabhängig sowohl möglich, zur Einstellung des Gasmassenstroms zur Regeneration des Adsorptionsfilters 5 entweder die Taktung oder den effektiven Querschnitt des Ventils 16 zu variieren oder aber die Leistung des Turbinenrades 7 zu variieren, indem entweder die Taktung oder der effektive Querschnitt des Ventils 13 beeinflusst wird. Ebenfalls kann auch die Taktung oder die Anpassung des effektiven Querschnitts des Ventils 13 und des Ventils 16 gleichzeitig erfolgen.

### Bezugszeichen

- 1: Verbrennungskraftmaschine
- 2: Ansaugleitung
- 3: Tank
- 4: erste Tankentlüftungsleitung
- 5: Adsorptionsfilter
- 6: zweite Tankentlüftungsleitung
- 6': zusätzlicher Teil der zweiten Tankentlüftungsleitung 6
- 7: Turbinenrad
- 8: Pumpenrad
- 9: Welle
- 10: Überbrückungsleitung
- 11: Verdichter
- 12: Drosselklappe
- 13: Ventil
- 14: Ventil
- 15: Ventil
- 16: Ventil

- A: Abzweig
- B: Einmündung
- C: Einmündung
- D: Abzweig

## Patentansprüche

1. Vorrichtung zur Tankentlüftung, wobei ein Tank (3) über eine erste Tankentlüftungsleitung (4), mit einem Adsorptionsfilter (5) verbunden ist, wobei der Adsorptionsfilter (5) über eine zweite Tankentlüftungsleitung (6), mit der Ansaugleitung (2) einer Verbrennungskraftmaschine (1) verbunden ist, wobei eine Antriebsvorrichtung vorgesehen ist, die ein Turbinenrad (7) und ein Pumpenrad (8) umfasst, wobei das Turbinenrad (7) und das Pumpenrad (8) miteinander gekoppelt sind, wobei das Pumpenrad (8) in der zweiten Tankentlüftungsleitung (6) angeordnet ist, wobei das Turbinenrad (7) in einer Überbrückungsleitung (10) angeordnet ist, wobei die Überbrückungsleitung (10) von der Ansaugleitung (2) sowohl abzweigt, als auch in die Ansaugleitung (2) einmündet, wobei die Überbrückungsleitung (10) stromabwärts eines in der Ansaugleitung (2) angeordneten Verdichters (11) von der Ansaugleitung (2) abzweigt.

2. Vorrichtung nach Patentanspruch 1, wobei die Überbrückungsleitung (10) stromabwärts des in der Ansaugleitung (2) angeordneten Verdichters (11) und stromaufwärts einer in der Ansaugleitung (2) angeordneten Drosselklappe (12) abzweigt und stromabwärts der Drosselklappe (12) wieder in die Ansaugleitung (2) einmündet.

3. Vorrichtung nach Patentanspruch 1, wobei die Überbrückungsleitung (10) stromabwärts eines in der Ansaugleitung (2) angeordneten Verdichters (11) und stromaufwärts einer in der Ansaugleitung (2) angeordneten Drosselklappe (12) abzweigt und stromaufwärts des Verdichters (11) wieder in die Ansaugleitung (2) einmündet.

4. Vorrichtung nach Patentanspruch 2 oder 3, wobei die zweite Tankentlüftungsleitung (6) stromaufwärts des Verdichters (11) in die Ansaugleitung (2) einmündet.

5. Vorrichtung nach Patentanspruch 1 bis 4, wobei ein Ventil (13) in der Überbrückungsleitung (10) stromaufwärts des Turbinenrades (7) der Antriebsvorrichtung angeordnet ist.

6. Vorrichtung nach Patentanspruch 1 bis 5, wobei die zweite Tankentlüftungsleitung (6) stromaufwärts des Pumpenrades (8) der Antriebsvorrichtung einen Abzweig (D) aufweist, von dem aus ein zusätzlicher Teil der zweiten Tankentlüftungsleitung (6') ausgeht, wobei dieser zusätzliche Teil der zweiten Tankentlüftungsleitung (6') in die Ansaugleitung (2) stromabwärts der Drosselklappe (12) einmündet, wobei in diesem zusätzlichen Teil der zweite Tankentlüftungsleitung (6') ein Ventil (15) angeordnet ist, wobei in der zweite Tankentlüftungsleitung (6) stromabwärts des Abzweiges (D) und stromabwärts des Pumpenrades (8) ebenfalls ein Ventil (14) angeordnet ist.

7. Vorrichtung nach Patentanspruch 6, wobei die Ventile (14, 15) in der zweiten Tankentlüftungsleitung (6) und dem zusätzlichen Teil der zweiten Tankentlüftungsleitung (6') Rückschlagventile sind, die in Richtung der Ansaugleitung (2) öffnen.

8. Vorrichtung nach Patentanspruch 6 oder 7, wobei stromaufwärts des Abzweiges (D) in der zweiten Tankentlüftungsleitung (6) ein Ventil (16) angeordnet ist.

## Claims

1. Apparatus for tank ventilation, wherein a tank (3) is connected with an adsorption filter (5) by way of a first tank ventilation line (4), wherein the adsorption filter (5) is connected with the intake line (2) of an internal combustion engine (1) by way of a second tank ventilation line (6), wherein a drive apparatus is provided, which comprises a turbine wheel (7) and a pump wheel (8), wherein the turbine wheel (7) and the pump wheel (8) are coupled with one another, wherein the pump wheel (8) is disposed in the second tank ventilation line (6), wherein the turbine wheel (7) is disposed in a bridging line (10), wherein the bridging line (10) not only branches off from the intake line (2) but also flows into the intake line (2), wherein the bridging line (10) branches off from the intake line (2) downstream from a compressor (11) disposed in the intake line (2).

2. Apparatus according to claim 1, wherein the bridging line (10) branches off downstream from a compressor (11) disposed in the intake line (2) and upstream from a throttle valve (12) disposed in the intake line (2), and flows back into the intake line (2) downstream from the throttle valve (12).

3. Apparatus according to claim 1, wherein the bridging line (10) branches off downstream from a compressor (11) disposed in the intake line (2) and upstream from a throttle valve (12) disposed in the intake line (2), and flows back into the intake line (2) upstream from the compressor (11).

4. Apparatus according to claim 2 or 3, wherein the second tank ventilation line (6) flows into the intake line (2) upstream from the compressor (11).

5. Apparatus according to claim 1 to 4, wherein a valve (13) is disposed in the bridging line (10) upstream from the turbine wheel (7) of the drive apparatus.

6. Apparatus according to claim 1 to 5, wherein the second tank ventilation line (6) has a branch (D) upstream from the pump wheel (8) of the drive apparatus, from where an additional part of the second tank ventilation line (6') proceeds, wherein this additional part of the second tank ventilation line (6') flows into the intake line (2) downstream from the throttle valve (12), wherein a valve (15) is disposed in this additional part of the second tank ventilation line (6'), wherein a valve (14) is also disposed in the second tank ventilation line (6) downstream from the branch (D) and downstream from the pump wheel (8).

7. Apparatus according to claim 6, wherein the valves (14, 15) in the second tank ventilation line (6) and the additional part of the second tank ventilation line (6') are kick-back valves that open in the direction of the intake line (2).

8. Apparatus according to claim 6 or 7, wherein a valve (16) is disposed in the second tank ventilation line (6), upstream from the branch (D).

## Revendications

1. Dispositif d'aération de réservoir, un réservoir (3) étant connecté à un filtre d'adsorption (5) par le biais d'une première conduite d'aération de réservoir (4), le filtre d'adsorption (5) étant connecté par le biais d'une deuxième conduite d'aération de réservoir (6) à la conduite d'admission (2) d'un moteur à combustion interne (1), un dispositif d'entraînement étant prévu, lequel comprend une roue de turbine (7) et une roue de pompe (8), la roue de turbine (7) et la roue de pompe (8) étant accouplées l'une à l'autre, la roue de pompe (8) étant disposée dans la deuxième conduite d'aération de réservoir (6), la roue de turbine (7) étant disposée dans une conduite de pontage (10), la conduite de pontage (10) partant de la conduite d'admission (2) et rentrant également dans la conduite d'admission (2), la conduite de pontage (10) partant de la conduite d'admission (2) en aval d'un compresseur (11) disposé dans la conduite d'admission (2).

2. Dispositif selon la revendication 1, la conduite de pontage (10) partant en aval du compresseur (11) disposé dans la conduite d'admission (2) et en amont d'un papillon d'étranglement (12) disposé dans la conduite d'admission (2) et rentrant en aval du papillon d'étranglement (12) à nouveau dans la conduite d'admission (2).

3. Dispositif selon la revendication 1, la conduite de pontage (10) partant en aval d'un compresseur (11) disposé dans la conduite d'admission (2) et en amont d'un papillon d'étranglement (12) disposé dans la conduite d'admission (2) et rentrant en amont du compresseur (11) à nouveau dans la conduite d'admission (2).

4. Dispositif selon la revendication 2 ou 3, dans lequel la deuxième conduite d'aération de réservoir (6) rentre en amont du compresseur (11) dans la conduite d'admission (2).

5. Dispositif selon les revendications 1 à 4, une soupape (13) étant disposée dans la conduite de pontage (10) en amont de la roue de turbine (7) du dispositif d'entraînement.

6. Dispositif selon les revendications 1 à 5, la deuxième conduite d'aération de réservoir (6) présentant un branchement (D) en amont de la roue de pompe (8) du dispositif d'entraînement, depuis lequel part une partie supplémentaire de la deuxième conduite d'aération de réservoir (6'), cette partie supplémentaire de la deuxième conduite d'aération de réservoir (6') rentrant dans la conduite d'admission (2) en aval du papillon d'étranglement (12), une soupape (15) étant disposée dans cette partie supplémentaire de la deuxième conduite d'aération de réservoir (6'), une soupape (14) étant également disposée dans la deuxième conduite d'aération de réservoir (6) en aval du branchement (D) et en aval de la roue de pompe (8).

7. Dispositif selon la revendication 6, les soupapes (14, 15) dans la deuxième conduite d'aération de réservoir (6) et dans la partie supplémentaire de la deuxième conduite d'aération de réservoir (6') étant des clapets anti-retour qui s'ouvrent dans la direction de la conduite d'admission (2).

8. Dispositif selon les revendications 6 ou 7, une soupape (16) étant disposée en amont du branchement (D) dans la deuxième conduite d'aération de réservoir (6).
